# EUROPEAN PATENT APPLICATION

(11) **EP 2 312 488 A1**
(43) Date of publication of application: **20.04.2011**
(21) Application number: 09804819.2
(22) Date of filing: 17.06.2009
(51) Int. Cl.: G06F 21/22, G06K 19/07

(54) **COMMUNICATION DEVICE, COMMUNICATION METHOD, AND PROGRAM**

(30) Priority: 07.08.2008 JP 2008204231
(71) Applicant: Sony Corporation, Tokyo 108-0075 (JP)
(72) Inventor: TAKEUCHI, Yasuo, Tokyo 108-0075 (JP)
(74) Representative: Körber, Martin Hans
(86) International application number: PCT/JP2009/061036
(87) International publication number: WO 2010/016332

(57) **Abstract**

Provided is a communication device including: a first operating system that executes commands belonging to a first command group; a second operating system that executes commands belonging to a second command group different from the first command group; and a determination unit that, when a first command belonging to the first command group is received from an external device, inputs the first command to the first operating system, when a first response is output from the first operating system as a response to the first command, transmits the first response to the external device, and when a second command belonging to the second command group is output from the first operating system as a response to the first command, inputs the second command to the second operating system and then inputs a second response as a response to the second command output from the second operating system to the first operating system.

## Description

### Technical Field

The present invention relates to a communication device, a communication method, and a program.

### Background Art

IC (Integrated Circuit) cards that incorporate an integrated circuit capable of information recording and computations have been put to practical use. Particularly, IC cards, also called smart cards, that include a processor in an integrated circuit and realize advanced information processing are widely used for various applications today as a means of settlement or a means of personal identification in daily life.

In general, information processing on an IC card is performed upon receiving a command issued from an external device which can communicate with the IC card. As for commands issued to the IC card, there are various types that cause the IC card to execute information input and output, computations, security processing or the like. Therefore, many IC cards developed recently incorporate an operating system (which is referred to hereinafter as an OS) that provides a platform for executing such a group of commands in its circuit. There are cases where a plurality of kinds of OSs are incorporated into an IC card in order to allow the IC card to work in conjunction with a plurality of external devices conforming to different specifications and expand the versatility of the IC card.

As techniques related to the IC card incorporating a plurality of OSs, techniques described in Patent Literature 1 and Patent Literature 2 below, for example, are known. For example, Patent Literature 1 discloses a technique that incorporates an OS for contact IC cards and an OS for contactless IC cards into one circuit and holds link information to data managed by each OS to thereby enable data sharing between the OSs. Further, Patent Literature 2 discloses a technique that manages processing history of each individual command to thereby prevent another command from being executed by another OS during execution of a command by a certain OS.

### Citation List

### Patent Literature

| | |
|---|---|
| Patent Literature 1: | JP 2002-259922 (A) |
| Patent Literature 2: | JP 2007-122289 (A) |

### Summary of Invention

### Technical Problem

However, a situation occurs where it is desirable to use a function of a second OS of an IC card by using a protocol that can work in conjunction only with a first OS of the IC card, for example. In such a case, if an interface that accepts a command from the first OS is prepared by making modification to the second OS, the security level of the second OS decreases. Further, application of the technique disclosed in Patent Literature 1 or 2 raises the necessity to add a function to both OSs, which causes a possibility of reducing the versatility or extensibility of the OS itself.

The present invention is made in view of the above-mentioned issue, and aims to provide novel and improved communication device, communication method, and program that enable calling of commands between OSs without decreasing the security level of the OSs.

### Solution to Problem

According to one aspect of the present invention, there is provided a communication device which includes a first operating system that executes commands belonging to a first command group, a second operating system that executes commands belonging to a second command group different from the first command group, and a determination unit that, when a first command belonging to the first command group is received from an external device, inputs the first command to the first operating system, when a first response is output from the first operating system as a response to the first command, transmits the first response to the external device, and when a second command belonging to the second command group is output from the first operating system as a response to the first command, inputs the second command to the second operating system and then inputs a second response as a response to the second command output from the second operating system to the first operating system.

Further, when the second command belonging to the second command group is received from an external device, the determination unit may input the second command to the second operating system, and when a second response is output from the second operating system as a response to the second command received from the external device, the determination unit may transmit the second response to the external device.

Further, the first operating system may include a command conversion unit that converts at least one command belonging to the first command group into a command belonging to the second command group.

Further, the commands belonging to the first command group may contain a header section and a data section, and the command conversion unit may convert a command by extracting a command belonging to the second command group from the data section of the command belonging to the first command group.

Further, the first operating system may further include a conversion table for converting a command belonging to the first command group into a command belonging to the second command group, and the command conversion unit may convert a command by referring to the conversion table and acquiring a command belonging to the second command group associated with the command belonging to the first command group.

Further, the first operating system may include a first command conversion unit that converts at least one command belonging to the first command group into a command belonging to the second command group, and a second command conversion unit that converts at least one command belonging to the first command group into another command belonging to the second command group.

Further, the communication device may further include a third operating system that executes commands belonging to a third command group different from the first command group and the second command group, and the first operating system may include a first command conversion unit that converts at least one command belonging to the first command group into a command belonging to the second command group, and a second command conversion unit that converts at least one command belonging to the first command group into a command belonging to the third command group.

Further, when the second command is output from the first operating system as a response to the first command, the determination unit may rewrite information identifying an application of the second operating system and contained in the second command according to a predetermined correspondence table before inputting the second command to the second operating system.

Further, the commands belonging to the second command group may contain a header section and a data section, and when the second command is output from the first operating system as a response to the first command, the determination unit may input the second command to the second operating system only when the header section of the second command satisfies a predetermined condition set in advance.

Further, when the second response as a response to the second command is not output from the second operating system even after a predetermined time interval has elapsed from input of the second command to the second operating system, the determination unit may input the second command to the second operating system again.

Further, when the second response as a response to the second command is not output from the second operating system even after a predetermined time interval has elapsed from input of the second command to the second operating system, the determination unit may input a response indicating occurrence of an error to the first operating system.

Further, according to another aspect of the present invention, there is provided a communication method in a communication device including a first operating system that executes commands belonging to a first command group and a second operating system that executes commands belonging to a second command group different from the first command group, which includes the steps of, when a first command belonging to the first command group is received from an external device, inputting the first command to the first operating system; when a first response is output from the first operating system as a response to the first command, transmitting the first response to the external device; when a second command belonging to the second command group is output from the first operating system as a response to the first command, inputting the second command to the second operating system; and inputting a second response output from the second operating system as a response to the second command output from the first operating system to the first operating system.

Further, according to another aspect of the present invention, there is provided a program causing a computer controlling a communication device to function as a first operating system that executes commands belonging to a first command group, a second operating system that executes commands belonging to a second command group different from the first command group, and a determination unit that, when a first command belonging to the first command group is received from an external device, inputs the first command to the first operating system, when a first response is output from the first operating system as a response to the first command, transmits the first response to the external device, and when a second command belonging to the second command group is output from the first operating system as a response to the first command, inputs the second command to the second operating system and then inputs a second response as a response to the second command output from the second operating system to the first operating system.

### Advantageous Effects of Invention

As described above, the communication device, the communication method, and the program according to the present invention enable calling of commands between OSs without decreasing the security level of the OSs.

### Brief Description of Drawings

[Fig. 1] Fig. 1 is a pattern diagram showing an overview of a communication device according to a first embodiment.
[Fig. 2] Fig. 2 is a block diagram showing a logical configuration of an intermediate layer according to the first embodiment.
[Fig. 3A] Fig. 3A is an illustrative diagram showing an example of a format of a command.
[Fig. 3B] Fig. 3B is an illustrative diagram showing an example of a format of a response.
[Fig. 4] Fig. 4 is a block diagram showing a logical configuration of a first operating system according to the first embodiment.
[Fig. 5A] Fig. 5A is the first half of an illustrative diagram for illustrating command conversion processing by a command conversion unit according to the first embodiment.
[Fig. 5B] Fig. 5B is the latter half of an illustrative diagram for illustrating command conversion processing by a command conversion unit according to the first embodiment.
[Fig. 6] Fig. 6 is a block diagram showing a logical configuration of a second operating system according to the first embodiment.
[Fig. 7] Fig. 7 is an illustrative diagram for illustrating three processing paths in a communication device.
[Fig. 8] Fig. 8 is an illustrative diagram for illustrating a relationship between types of external devices and the processing paths in Fig. 7.
[Fig. 9] Fig. 9 is a flowchart showing a flow of a transfer destination determination process according to the first embodiment.
[Fig. 10] Fig. 10 is a flowchart showing a flow of a first command execution process according to the first embodiment.
[Fig. 11] Fig. 11 is a flowchart showing a flow of a second command execution process according to the first embodiment.
[Fig. 12] Fig. 12 is a block diagram showing a first alternative example of the intermediate layer according to the first embodiment.
[Fig. 13] Fig. 13 is a block diagram showing a second alternative example of the intermediate layer according to the first embodiment.
[Fig. 14] Fig. 14 is a pattern diagram showing an overview of a communication device according to a second embodiment.
[Fig. 15] Fig. 15 is a block diagram showing a logical configuration of a first operating system according to the second embodiment.
[Fig. 16] Fig. 16 is a block diagram showing a logical configuration of an intermediate layer according to the second embodiment.
[Fig. 17] Fig. 17 is a block diagram showing an example of a hardware configuration of a communication device.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Further, description will be given in the following order.
[1] First Embodiment
[1 -1] Basic Configuration of Communication Device
[1 -2] Example of Flow of Communication Process
[1 -3] First Alternative Example
[1 -4] Second Alternative Example
[2] Second Embodiment

### [1] First Embodiment

### [1 -1] Basic Configuration of Communication Device

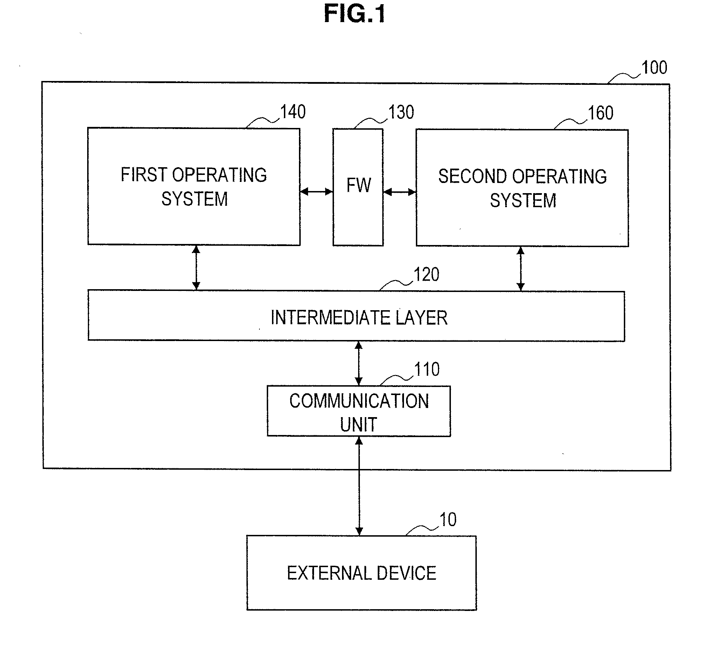

Firstly, a basic configuration of a communication device 100 according to a first embodiment of the present invention is described with reference to Figs. 1 to 6.

Fig. 1 is a pattern diagram schematically showing a communication device 100 according to the first embodiment of the present invention. An external device 10 and the communication device 100 are illustrated in Fig. 1.

The external device 10 is a communication device that can communicate with the communication device 100. For example, the external device 10 may be a reader/writer that reads and writes information recorded on the communication device 100. Further, the external device 10 may be an information processing device that provides an arbitrary application to a user by using functions mounted on the communication device 100.

On the other hand, the communication device 100 is typically implemented as a contact or contactless IC card or IC chip. Further, the communication device 100 may be a communication module included in an information communication terminal such as a cellular phone. The communication device 100 provides a command group for executing input and output of information recorded in its device or various computations, as described later. Then, when a command is input from the external device 10, the communication device 100 executes processing corresponding to the command and outputs a response to the external device 10.

Referring to Fig. 1, the communication device 100 includes a communication unit 110, an intermediate layer 120, a firewall (FW) 130, a first operating system (referred to hereinafter as a first OS) 140, a second operating system (referred to hereinafter as a second OS) 160.

The communication unit 110 is a communication interface that mediates communication of the communication device 100 with the external device 10. Input of commands from the external device 10 to the communication device 100 and output of responses from the communication device 100 to the external device 10 are performed through the communication unit 110. For example, when the communication device 100 performs contactless communication with the external device 10, the communication unit 110 can be implemented as a communication interface conforming to standard specification such as NFC (Near Field Communication).

The intermediate layer 120 is a logical hierarchy provided between the communication unit 110 and the first OS 140, the second OS 160. The intermediate layer 120 determines either one of the first OS 140 or the second OS 160 as a transfer destination of a command input from the external device 10 and transfers the command, as described in detail later. Further, the intermediate layer 120 outputs a response returned for the transferred command to the external device 10 or further transfers it to either one of the first OS 140 or the second OS 160. Furthermore, a means of controlling access to memory of the first OS 140 and the second OS 160 or the like is provided in the intermediate layer 120.

The firewall 130 is provided to prevent data access or command input and output from being performed directly between the first OS 140 and the second OS 160. In this embodiment, the firewall 130 is logically implemented in practice by a memory control means included in the intermediate layer 120, which is described later. However, the firewall 130 may be implemented by physically dividing a memory area between the OSs, for example.

The first OS 140 and the second OS 160 execute input and output of information held by the communication device 100 and predetermined computations according to input commands. In this specification, among commands which are executable in the communication device 100, a set of commands executed by the first OS 140 is referred to as a first command group, and a set of commands executed by the second OS 160 is referred to as a second command group. For example, the first OS 140 may be Java Card (registered trademark) OS, and the second OS 160 may be Felica (registered trademark) OS or the like. Specific configurations of the first OS 140 and the second OS 160 according to the embodiment are described in detail later.

The overview of the communication device 100 according to the first embodiment of the present invention is described above with reference to Fig. 1. Hereinafter, a detailed configuration of each of the intermediate layer 120, the first OS 140 and the second OS 160 is described.

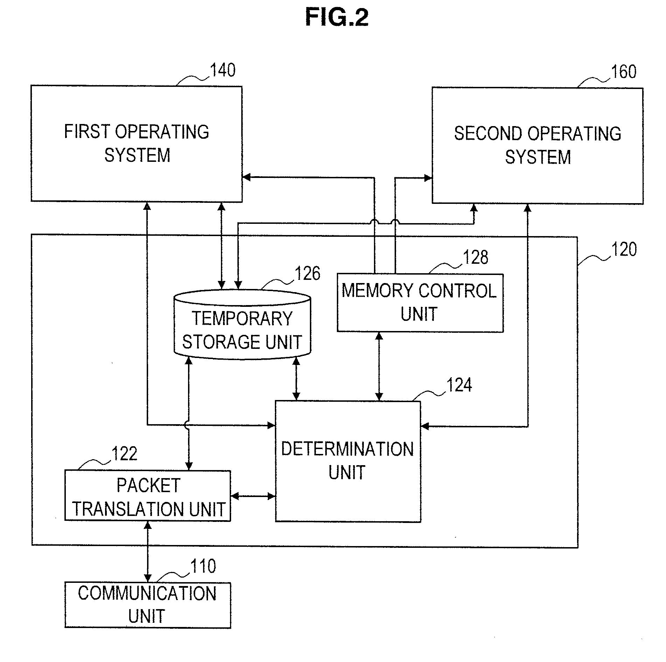

Fig. 2 is a block diagram showing a detailed configuration of the intermediate layer 120 according to the embodiment. Referring to Fig. 2, the intermediate layer 120 includes a packet translation unit 122, a determination unit 124, a temporary storage unit 126, and a memory control unit 128.

When a communication packet is received by the communication unit 110, the packet translation unit 122 translates the content of the communication packet and directs the determination unit 124 to determine the transfer destination of a command for the first OS 140 or the second OS 160. At this time, the command acquired from the communication packet is stored in the temporary storage unit 126.

The determination unit 124 determines which of a command belonging to the first command group to be transferred to the first OS 140 (which is referred to hereinafter as a first command) and a command belonging to the second command group to be transferred to the second OS 160 (which is referred to hereinafter as a second command) the above-described command received form the external device is, for example.

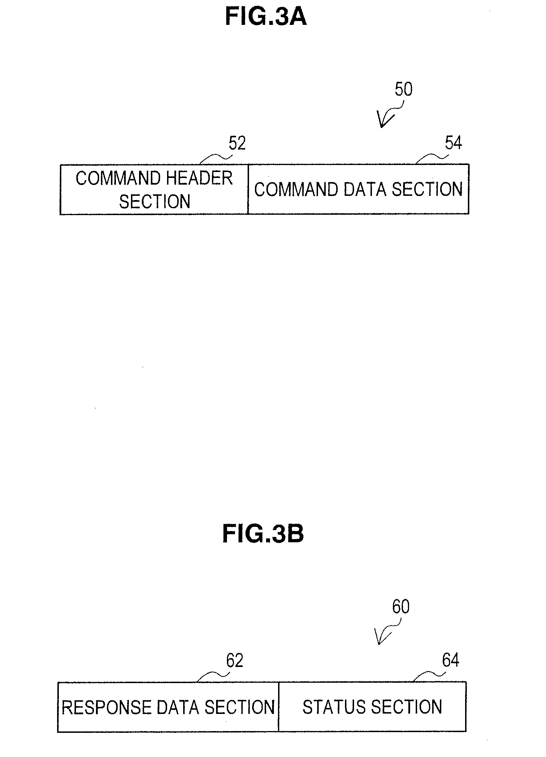

Fig. 3A is an illustrative diagram showing an example of a format of a command received by the communication device 100. Referring to Fig. 3A, a command 50 includes a command header section 52 and a command data section 54. The command header section 52 contains a command code for identifying the type of the command, a parameter for executing the command or the like, for example. On the other hand, the command data section 54 contains data to be processed by the command or the like. Further, processing to select an application may be implemented by setting a code to command selection of an application to the command header section 52 and including an application code for identifying an application to execute the command into the command data section 54.

The determination unit 124 refers to the command code contained in the header section 52, for example, and when it determines that the above-described command received from the external device 10 is the first command, the determination unit 124 inputs the first command to the first OS 140. Then, when a response as a response to the first command (which is referred to hereinafter as a first response) is output from the first OS 140 after that, the determination unit 124 outputs the first response to the packet translation unit 122, so that it is transmitted to the external device 10 through the communication unit 110.

Fig. 3B is an illustrative diagram showing an example of a format of a response transmitted from the communication device 100. Referring to Fig. 3B, a response 60 includes a response data section 62 and a status section 64. The response data section 62 contains data acquired or generated as a result of executing a command or the like, for example. On the other hand, the status section 64 contains status information indicating whether execution of a command ends normally or ends abnormally or the like.

In this embodiment, there is a case where, after the determination unit 124 inputs the first command to the first OS 140, the second command to be transferred to the second OS 160, instead of the first response, is output from the first OS 140. In such a case, the determination unit 124 determines that the second command is output by referring to the command code contained in the command header section 52 shown in Fig. 3A, for example, and inputs the second command to the second OS 160. After that, when a response as a response to the second command (which is referred to hereinafter as a second response) is output from the second OS 160, the determination unit 124 inputs the second response to the first OS 140 that has output the second command, rather than transmitting it to the external device 10. Then, when the first response is finally output from the first OS 140, the determination unit 124 outputs the first response to the packet translation unit 122, so that it is transmitted to the external device 10 through the communication unit 110.

Further, when the determination unit 124 determines that the command received from the external device 10 is the second command, it inputs the second command to the second OS 160. Then, when the second response as a response to the second command is output from the second OS 160, the determination unit 124 outputs the second response to the packet translation unit 122, so that it is transmitted to the external device 10 through the communication unit 110. Determination as to whether the second response as a response to the second command is input to the first OS 140 or transmitted to the external device 10 can be made by temporarily storing a flag value or the like for determining a transfer destination into the temporary storage unit 126, for example.

Note that, when a response as a response to the second command is not output from the second OS 160 even after a predetermined time interval defined in advance has elapsed from the input of the second command to the second OS 160, for example, the determination unit 124 may input the second command to the second OS 160 again. Alternatively, when a response as a response to the second command is not output even after a predetermined time interval has elapsed, the determination unit 124 may notify the first OS 140 of the occurrence of an error by inputting a response containing status information indicating timeout to the first OS 140, for example.

The description of the intermediate layer 120 according to the embodiment is continued by referring to Fig. 2.

The temporary storage unit 126 temporarily stores commands and responses exchanged between the packet translation unit 122 and the determination unit 124 and between the determination unit 124 and first OS 140 or the second OS 160, control data or the like. The temporary storage unit 126 can be implemented by using RAM (Random Access Memory), for example.

The memory control unit 128 controls the operation of each of the first OS 140 and the second OS 160 in order to avoid that memory access occurs concurrently between the first OS 140 and the second OS 160 and a failure occurs in the communication device 100. The memory control unit 128 can be implemented by using a known MMU (Memory Management Unit), for example. Alternatively, the first OS 140 and the second OS 160 may be mounted on physically different IC chips, and power supply to each IC chip may be controlled by the memory control unit 128.

The detailed configuration of the intermediate layer 120 according to the embodiment is described above with reference to Figs. 2 and 3. Note that the intermediate layer 120 may be implemented as a kernel of the communication device 100. Specifically, a common management function group of the intermediate layer 120 for the first OS 140 and the second OS 160, which is described above, may be implemented as a kernel of the communication device 100.

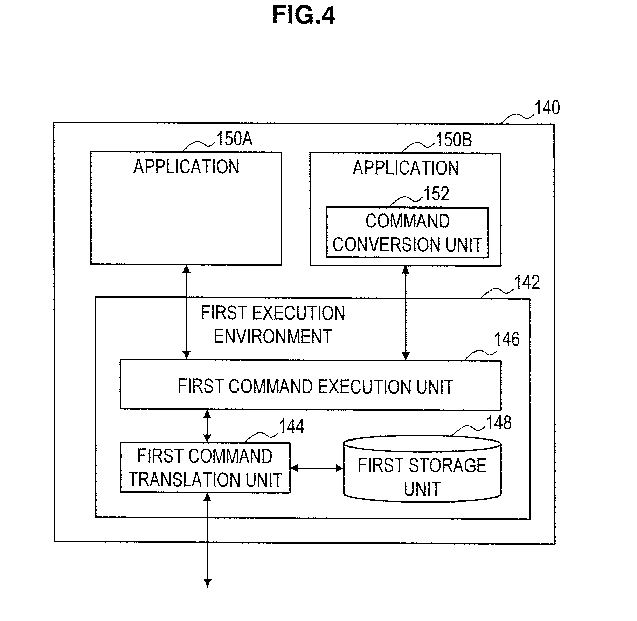

Fig. 4 is a block diagram showing a detailed configuration of the first OS 140 according to the embodiment. Referring to Fig. 4, the first OS 140 includes a first execution environment 142 and applications 150A and 150B.

The first execution environment 142 is a software group that provides a platform for the first OS 140 to execute the first command group. The first execution environment 142 mainly includes a first command translation unit 144, a first command execution unit 146, and a first storage unit 148.

The first command that is input to the first OS 140 by the determination unit 124 of the intermediate layer 120 is first converted into a format which is executable by a CPU (Central Processing Unit) or the like of the communication device 100 by the first command translation unit 144 and output to the first storage unit 148. Then, the first command is executed by the first command execution unit 146.

The applications 150 (150A and 150B) are arbitrary applications that operate on the first OS 140 by execution of the first command. The term "application" involves an applet, software containing a simpler logic only or the like. Which of the applications 150A and 150B is executed is determined based on an application code or the like contained in the command data section 54 of the first command by setting a code to command selection of an application to the command header section 52 of the first command, for example.

In this embodiment, when the application 150A is executed for the first command, input and output of information corresponding to the application 150A, predetermined computations or the like is performed, and the first response is output to the temporary storage unit 126 of the intermediate layer 120.

On the other hand, when the application 150B is executed for the first command, the first command is converted into the second command by a command conversion unit 152 included in the application 150B, and the second command is output to the temporary storage unit 126 of the intermediate layer 120.

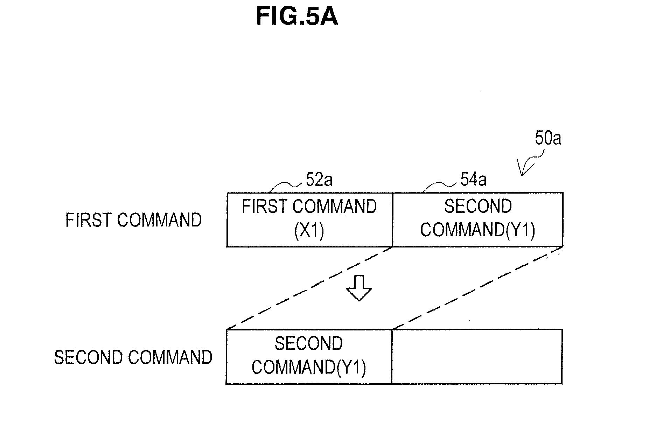

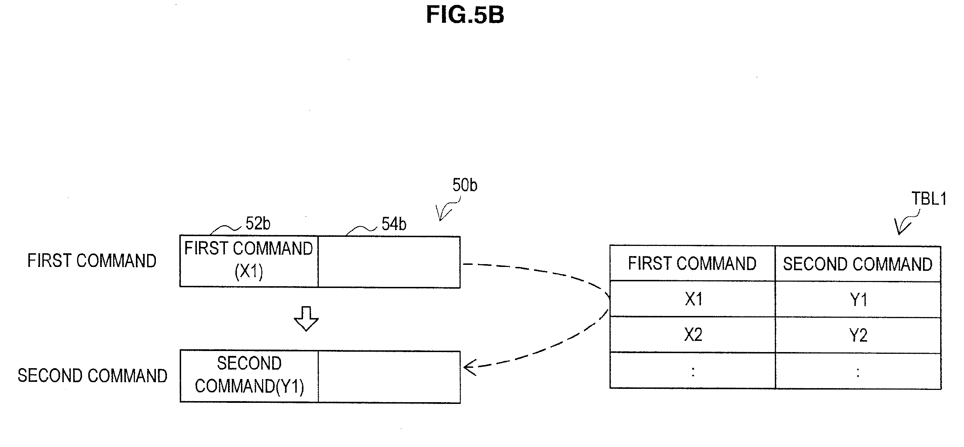

The conversion of a command by the command conversion unit 152 can be realized by a technique shown in Fig. 5A or 5B, for example. Figs. 5A and 5B are illustrative diagrams for illustrating examples of command conversion processing by the command conversion unit 152.

In Fig. 5A, a command header section 52a of a first command 50a contains a command code indicating that the command is the first command. Further, a command data section 54a contains a series of information constituting a command header section of the second command after conversion. Then, the command conversion unit 152 extracts the command data section 54a of the input first command 50a and outputs it to thereby convert the first command 50a into the second command.

On the other hand, in Fig. 5B, a command header section 52b of a first command 50a contains a command code indicating that the command is the first command, just like in Fig. 5A. Further, a command conversion table TBL1 is held in advance in a storage area available to the command conversion unit 152. Then, the command conversion unit 152 acquires a command code of the second command associated with the command code contained in the command header section 52b of the input first command 50b from the command conversion table TBL1 and outputs it to thereby convert the first command 50b into the second command. For example, in the example of Fig. 5B, the first command X1 can be converted into the second command Y1, and the first command X2 can be converted into the second command Y2.

As is understood from the illustrations of Figs. 4 and 5, when the first command is executed by the first OS 140, the first response or the second command is output from the first OS 140 to the intermediate layer 120. Then, as described earlier, the first response is transmitted to the external device 10, and the second command is input to the second OS 160.

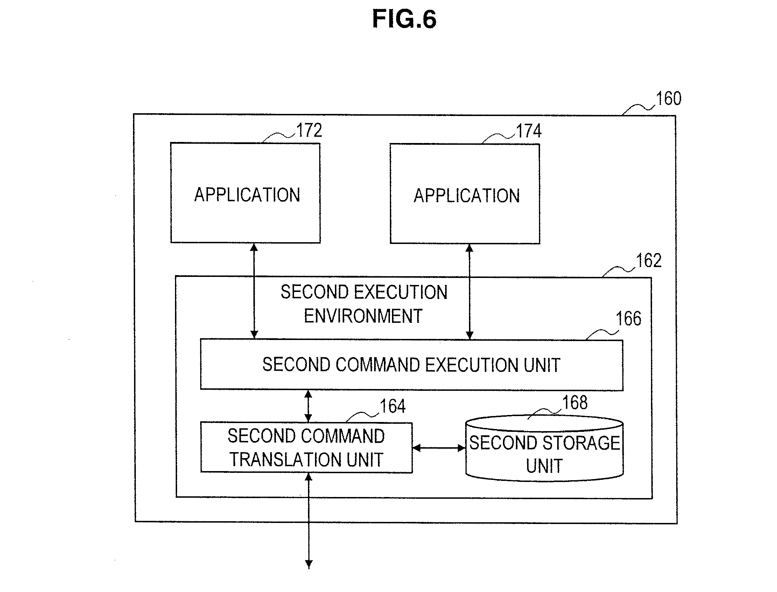

Fig. 6 is a block diagram showing a detailed configuration of the second OS 160 according to the embodiment. Referring to Fig. 6, the second OS 160 includes a second execution environment 162 and applications 172 and 174.

The second execution environment 162 is a software group that provides a platform for the second OS 160 to execute the second command group. The second execution environment 162 mainly includes a second command translation unit 164, a second command execution unit 166, and a second storage unit 168.

The second command that is input to the second OS 160 by the determination unit 124 of the intermediate layer 120 is first converted into a format which is executable by a CPU or the like of the communication device 100 by the second command translation unit 164 and output to the second storage unit 168. Then, the second command is executed by the second command execution unit 166.

The applications 172 and 174 are arbitrary applications that operate on the second OS 160 by execution of the second command. In this example, when the application 172 or 174 is executed for the second command, input and output of information corresponding to each application, predetermined computations or the like is performed, and the second response is output to the temporary storage unit 126 of the intermediate layer 120. Which of the applications 172 and 174 is executed is determined based on an application code or the like contained in the command header section 52 of the second command, for example.

The second response output as a result of execution of the second command by the second OS 160 is transmitted from the intermediate layer 120 to the external device 10 through the communication unit 110 when the second command is received from the external device 10 as described above. On the other hand, when the second command is output from the first OS 140, the second response is input to the first OS 140 by the intermediate layer 120.

The second response that is output from the second OS 160 and input to the first OS 140 is processed by the application 150B that has output the second command, for example, and output to the intermediate layer 120 as the first response that contains the execution result of the second command. Then, the first response is transmitted from the intermediate layer 120 to the external device 10 through the communication unit 110.

Note that the first storage unit 148 and the second storage unit 168 may be those divided virtually by the function of the memory control unit 128 described above. Specifically, the first storage unit 148 and the second storage unit 168 may be configured by physically a single recording device.

### [1 -2] Example of Flow of Communication Process

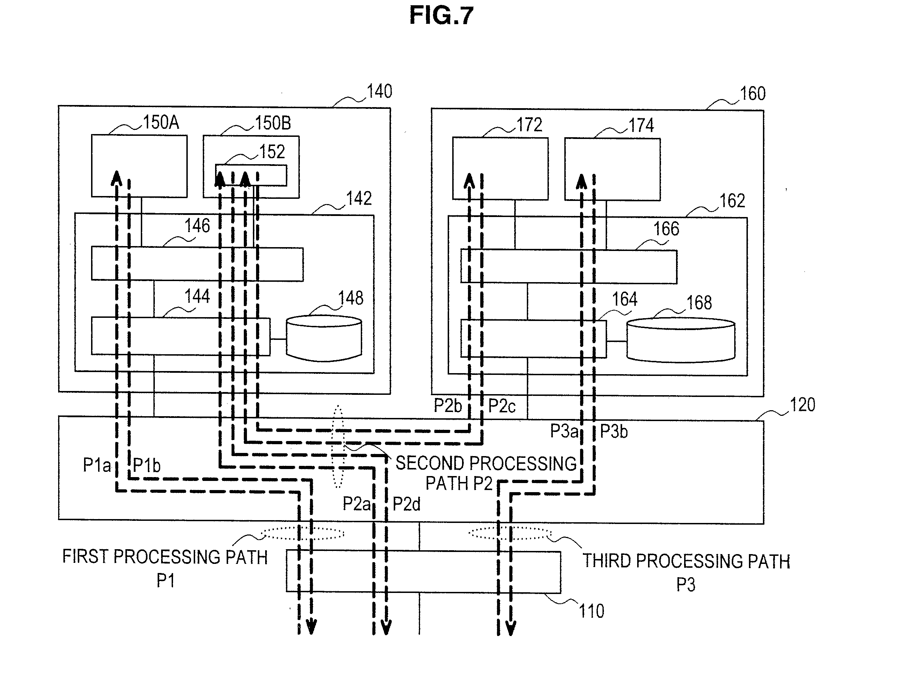

The basic configuration of the communication device 100 according to the embodiment is described above with reference to Figs. 1 to 6. Summarizing the above description, paths of processing by the communication device 100 are mainly three kinds of paths shown in Fig. 7.

Referring to Fig. 7, a first processing path is a path in which the first command received from the external device 10 is executed by the first OS 140, and the first response output from the first OS 140 as a result is transmitted to the external device 10 (P1a, b).

A second processing path is a path in which the first command received from the external device 10 is converted into the second command by the first OS 140, and the first response containing a result of executing the second command by the second OS 160 is output from the first OS 140 and transmitted to the external device 10 (P2a to d).

A third processing path is a path in which the second command received from the external device 10 is executed by the second OS 160, and the second response output from the second OS 160 as a result is transmitted to the external device 10 (P3a, b).

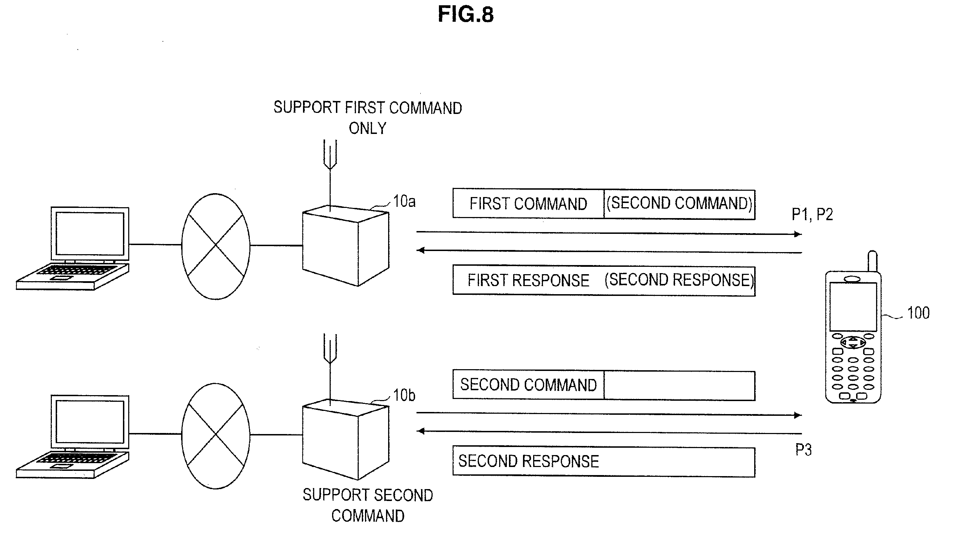

A case is assumed where a communication protocol between the external device 10 and the communication device 100 supports the first command only. The external device 10 in such a case is shown as an external device 10a in Fig. 8.

The external device 10a in Fig. 8 can issue the first command and use an arbitrary application operating on the first OS 140 by a first processing path P1 of the communication device 100. In addition, the external device 10a can issue the first command and use an arbitrary application operating on the second OS 160 by a second processing path P2 of the communication device 100. At this time, it appears to the external device 10a as if only the first command is executed by the communication device 100. This means that it is not necessary to make modification to the external device 10a in order to provide arbitrary application services of the first OS 140 and the second OS 160 to a user.

Further, an external device 10b whose communication protocol with the communication device 100 supports the second command is also shown in Fig. 8. The external device 10b can issue the second command and use an arbitrary application operating on the second OS 160 by a third processing path P3 of the communication device 100. At this time, if the second OS 160 of the communication device 100 is provided with a special interface for accepting access from the first OS 140, there is a possibility that the interface is abused by a user who makes connection through the external device 10b. However, in this embodiment, because the second OS 160 accepts only the second command as usual, the security level of the second OS 160 does not decrease.

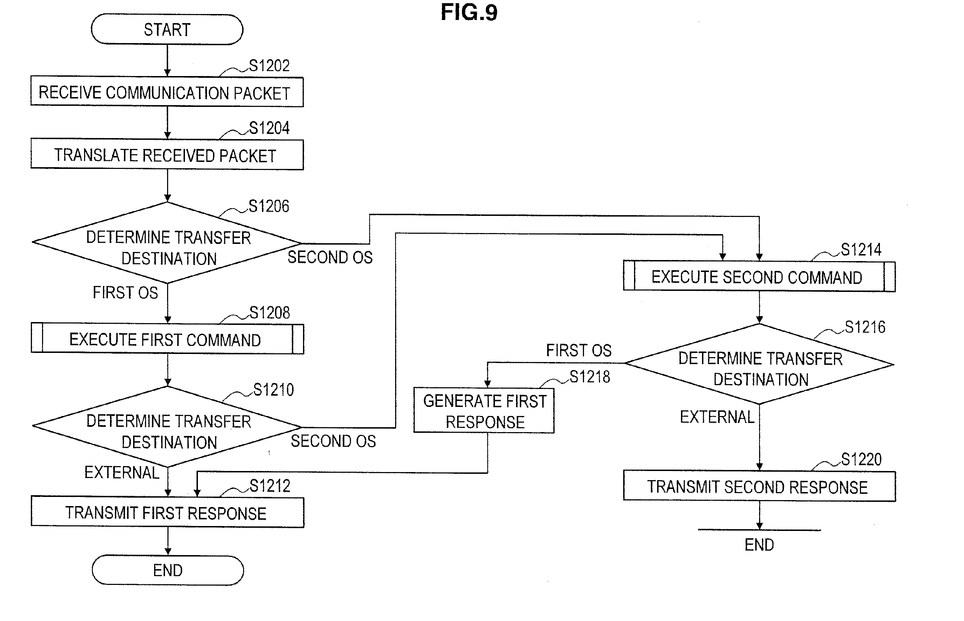

Figs. 9 to 11 are flowcharts showing an example of communication processing by the communication device 100 according to the embodiment. Fig. 9 mainly shows a flow of a transfer destination determination process by the determination unit 120 of the intermediate layer 120.

Referring to Fig. 9, the transfer destination determination process starts triggered by reception of a communication packet from the external device 10 through the communication unit 110 (S1202). The received communication packet is written into the temporary storage unit 126.

Next, the packet translation unit 122 translates the content of the communication packet and, when the first command or the second command is contained in the communication packet, directs the determination unit 124 to determine the transfer destination of the command (S1204).

Then, the determination unit 124 determines the transfer destination of the command by referring to the command header section 52 of the received command, for example, and identifying the command as either the first command or the second command (S1206). As a result, when the received command is the first command, the determination unit 124 inputs the first command to the first OS 140. Further, when the received command is the second command, the determination unit 124 inputs the second command to the second OS 160.

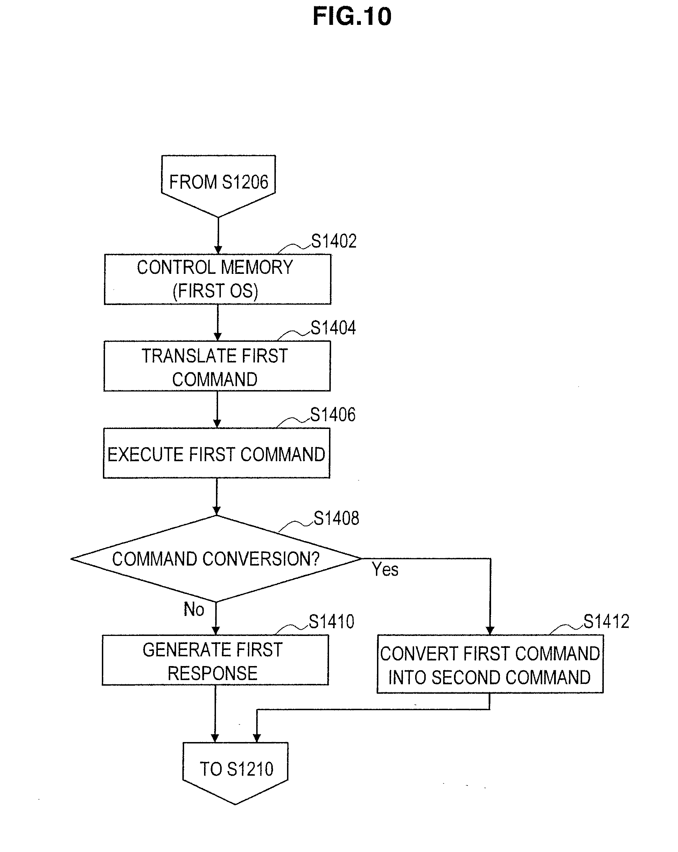

Upon input of the first command, the first OS 140 executes the first command (S 1208). An execution process of the first command by the first OS 140 is described in detail hereinafter with reference to Fig. 10.

Fig. 10 is a flowchart partially illustrating the flow of the first command execution process by the first OS 140. Referring to Fig. 10, after S1206 of Fig. 9, access to memory of the first OS 140 is permitted by the memory control unit 128 of the intermediate layer 120 firstly (S 1402).

Then, the first command translation unit 144 that has received the first command in the first OS 140 translates the first command and converts it into an executable format (S 1404). Further, the first command execution unit 146 executes the first command converted into the executable format (S 1406).

In this step, the process branches off depending on whether the application 150 that operates by execution of the first command performs conversion of the command or not (S1408). For example, the application 150A shown in Fig. 4 generates the first response as a response to the first command without performing conversion of the command (S1410). In this case, the generated first response is written to the temporary storage unit 126 of the intermediate layer 120. After that, the process shifts to S 1210 of Fig. 9.

On the other hand, the application 150B shown in Fig. 4, for example, includes the command conversion unit 152. Therefore, when the application 150B operates, the first command is converted into the second command by the command conversion unit 152 (S1412). The second command generated in this step is written to the temporary storage unit 126 of the intermediate layer 120. After that, the process shifts to S1210 of Fig. 9.

The description returns to Fig. 9. When a response as a response to the first command is output from the first OS 140, the determination unit 124 determines whether the response should be transmitted to the external device 10 or transferred to the second OS 160 (S1210).

At this time, when the first response is output from the first OS 140, the determination unit 124 transmits the first response to the external device 10 through the communication unit 110 (S 1212), and a series of processing by the communication device 100 ends. On the other hand, when the second command is output from the first OS 140, the determination unit 124 inputs the second command to the second OS 160.

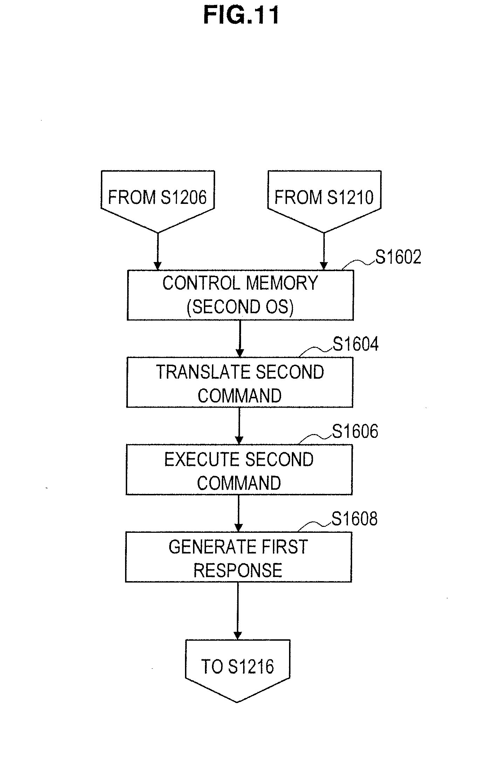

Then, upon input of the second command, the second OS 160 executes the second command (S1214). An execution process of the second command by the second OS 160 is described in detail hereinafter with reference to Fig. 11.

Fig. 11 is a flowchart illustrating the flow of the second command execution process by the second OS 160. Referring to Fig. 11, when the second command is input to the second OS 160 as a result of the determination in S1206 or S1210 of Fig.9, access to memory of the second OS 160 is permitted by the memory control unit 128 of the intermediate layer 120 firstly (S 1602).

Then, the second command translation unit 164 that has received the second command in the second OS 160 translates the second command and converts it into an executable format (S1604). Further, the second command execution unit 166 executes the second command converted into the executable format (S1606).

Then, the second response as a response to the second command is generated by the application 172 or 174 shown in Fig. 6, for example (S1608). The second response generated in this step is written to the temporary storage unit 126 of the intermediate layer 120. After that, the process shifts to S1216 of Fig. 9.

The description returns to Fig. 9. When the second response as a response to the second command is output from the second OS 160, the determination unit 124 determines whether the response should be transmitted to the external device 10 or transferred to the first OS 140 (S1216).

At this time, when the second command is received from the external device 10, the determination unit 124 transmits the second response to the external device 10 through the communication unit 110 (S1220), and a series of processing by the communication device 100 ends.

On the other hand, when the second command is output from the first OS 140, the determination unit 124 inputs the second response to the first OS 140. At this time, the second response is processed by the application 150B that has output the second command, for example. The first response is thereby generated (S 1218).

Then, the first response generated based on the second response is transmitted to the external device 10 through the communication unit 110 (S 1212), and a series of processing by the communication device 100 ends.

An example of the flow of the communication process by the communication device 100 is described above with reference to Figs. 9 to 11. Note that, although the example in which the second command converted from the first command by the first OS 140 is executed by the second OS 160 with no particular restriction is shown herein, restrictions may be imposed on transfer of commands between OSs through the intermediate layer 120 as in alternative examples of the embodiment described hereinbelow.

### [1 -3] First Alternative Example

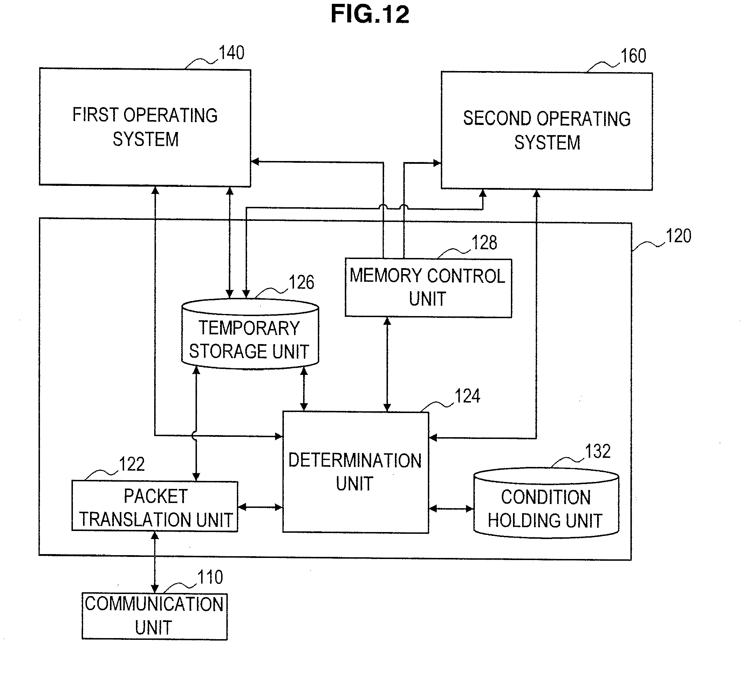

Fig. 12 is a block diagram showing a configuration of an intermediate layer 120 according to a first alternative example of the embodiment. Referring to Fig. 12, the intermediate layer 120 according to the alternative example includes a packet translation unit 120, a determination unit 124, a temporary storage unit 126, a memory control unit 128, and a condition holding unit 132.

The condition holding unit 132 holds a condition that is defined in advance for the second command to be transferred to the second OS 160.

For example, a command code which indicates the type of the command for which transfer from the first OS 140 is permitted, among command codes that can be contained in the command header section 52 of the second command, may be held in the condition holding unit 132. In this case, only when the second command which contains the command code held by the condition holding unit 132 is output from the first OS 140, the determination unit 124 can transfer the second command to the second OS 160.

Further, for example, an application code which specifies an application of the second OS 160 for which calling from the first OS 140 is permitted may be held in the condition holding unit 132. In this case, only when the second command which contains the application code held by the condition holding unit 132 is output from the first OS 140, the determination unit 124 can transfer the second command to the second OS 160. Further, the determination unit 124 can transfer the second command to the same application of the second OS 160 until an application code which specifies another application is selected subsequently in the condition holding unit 132.

Thus, according to the alternative example, it is possible to restrict the transfer of commands from the first OS 140 to the second OS 160 according to the type of the command or the like. The security of the communication device 100 is thereby further enhanced.

Note that, when the determination unit 124 does not transfer the second command output from the first OS 140, the determination unit 124 may notify the first OS 140 that the second command is not transferred by returning a response containing a predetermined error code to the first OS 140, for example.

### [1 -4] Second Alternative Example

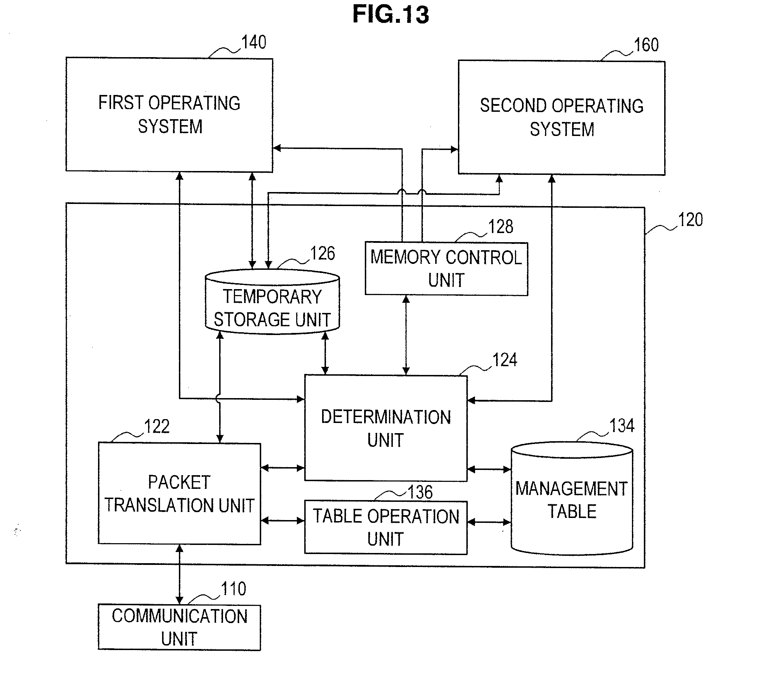

Fig. 13 is a block diagram showing a configuration of an intermediate layer 120 according to a second alternative example of the embodiment. Referring to Fig. 13, the intermediate layer 120 according to the alternative example includes a packet translation unit 120, a determination unit 124, a temporary storage unit 126, a memory control unit 128, a management table 134, and a table operation unit 136.

In the management table 134, a unique application code which identifies an application of the second OS 160 is held in advance in a format associated one-to-one with an arbitrary external specification code, for example.

Then, when transferring the second command output from the first OS 140 to the second OS 160, the determination unit 124 refers to the management table 134, rewrites the external specification code contained in the second command to the above-described application code and then inputs the second command to the second OS. Specifically, in this alternative example, the management table 134 serves as a correspondence table for hiding the unique application code of the second OS 160 from the first OS 140. In this case, the external specification code is also a code which identifies the application of the second OS 160, and the external specification code may be an arbitrary character string using alphabets and numerals or the like, for example.

The table operation unit 136 is an interface for registering, changing or deleting a combination of the external specification code and the application code in the management table 134. For example, the table operation unit 136 receives a command for management table operation which does not belong to the first command group and the second command group from the external device 10 through the communication device 100 and registers, changes or deletes the combination of the above-described codes in the management table 134.

According to the alternative example, the unique application code which identifies each application of the second OS 160 is hidden from the first OS 140, and the external specification code which is registered in advance in the management table 134 can be specified instead. It is thereby possible to further enhance the security of the communication device 100 and reduce the effect of a change in the application of the second OS 160 on the first OS 140.

The first embodiment of the present invention is described above with reference to Figs. 1 to 13. According to the embodiment, as described in relation to Fig. 8, it is possible to use application services by the first OS 140 and the second OS 160 of the communication device 100 through the device that supports the first command only. This eliminates the need to support a plurality of communication protocols between the communication device 100 and the external device 10, thereby expanding the versatility of the communication device 100. Further, because it is not necessary to provide each OS with a special interface for accepting access from another OS, the security level of the OS does not decrease.

Further, restrictions may be imposed on exchange of commands between the OSs by providing the intermediate layer 120 with a means of filtering transfer of the commands. Further, information such as the application code which is necessary for execution of a command by the second OS 160 may be hidden in the intermediate layer 120. This enables further enhancement of the security of the communication device 100.

### [2] Second Embodiment

In the first embodiment, the example in which only one means of converting the first command into the second command is provided in the first OS 140 in the communication device 100 is described. However, a plurality of means of converting the first command into the second command may exist.

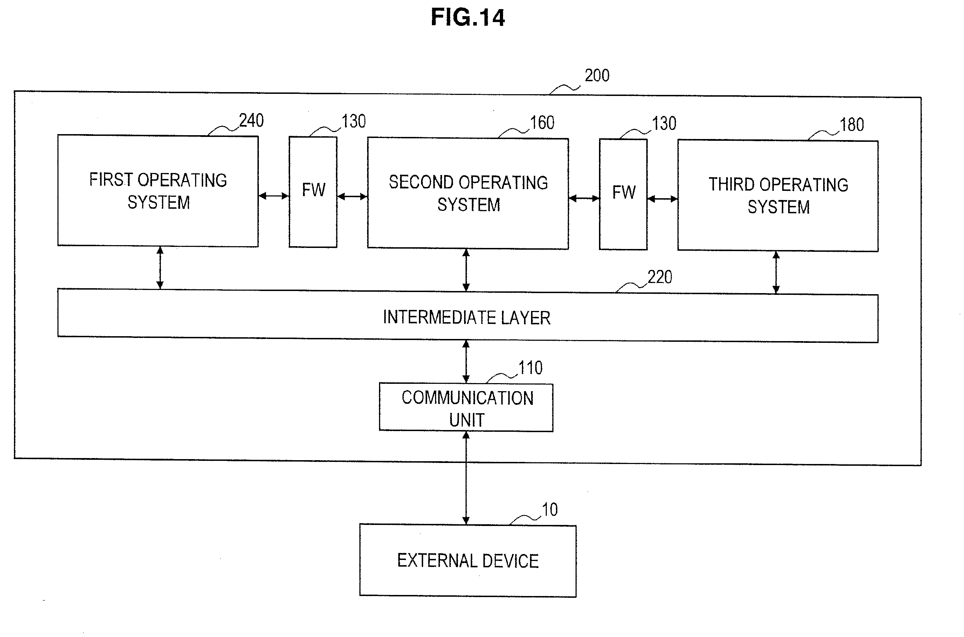

Fig. 14 is a pattern diagram schematically showing a communication device 200 according to a second embodiment of the present invention. Referring to Fig. 14, the communication device 200 includes a communication unit 110, an intermediate layer 220, a firewall 130, a first OS 240, a second OS 160 and a third OS 180. Further, the communication device 200 is connected to an external device 10 through the communication unit 110.

In this embodiment, the intermediate layer 220 is a logical hierarchy placed between the communication unit 110 and the first OS 240, the second OS 160 and the third OS 180. The intermediate layer 220 determines one of the first OS 240, the second OS 160 and the third OS 180 as a transfer destination of a command input from the external device 10 and transfers the command. Further, the intermediate layer 220 outputs a response returned for the transferred command to the external device 10 or further transfers it to another OS. Furthermore, a means of controlling access to memory of the first OS 240, the second OS 160 and the third OS 180 or the like is provided in the intermediate layer 220.

The first OS 240, the second OS 160 and the third OS 180 execute input and output of information held by the communication device 100 and predetermined computations according to input commands. Specifically, the first OS 240 executes a first command which belongs to a first command group, the second OS 160 executes a second command which belongs to a second command group, and the third OS 180 executes a third command which belongs to a third command group. Further, the first OS 240 includes two command conversion means that convert the first command into the second command and the third command, respectively, as described later.

On the other hand, the third OS 180 includes an execution environment and applications just like the configuration of the second OS shown in Fig. 6, for example, and executes the third command and outputs a third response.

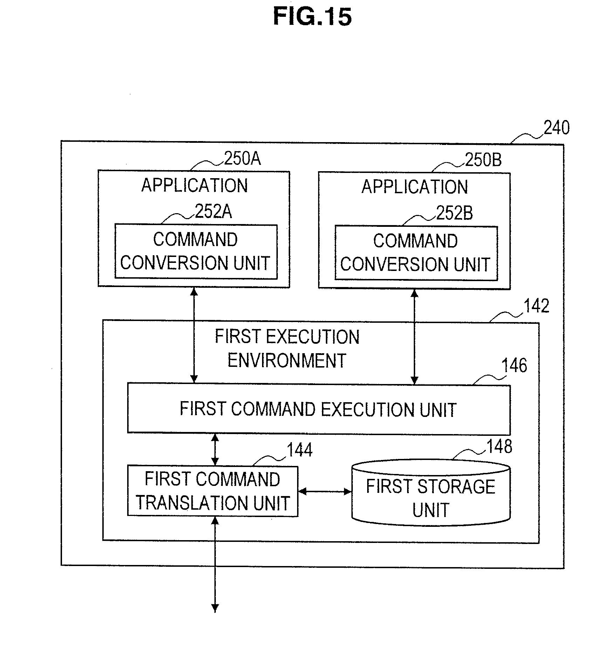

Fig. 15 is a block diagram showing a detailed configuration of the first OS 240 according to the embodiment. Referring to Fig. 15, the first OS 240 includes a first execution environment 142 and applications 250A and 250B. The first execution environment 142 includes a first command translation unit 144, a first command execution unit 146 and a first storage unit 148. Further, the application 250A includes a command conversion unit 252A. The application 250B includes a command conversion unit 252B.

The applications 250 (250A and 250B) are arbitrary applications that operate on the first OS 240 by execution of the first command. Which of the applications 250A and 250B is executed is determined by the method of selection using the application code or the like contained in the command data section 54 of the first command, for example.

In this embodiment, the command conversion unit 252A converts the first command input from the intermediate layer 220 into the second command to be executed by the second OS 160. Further, the command conversion unit B converts the first command input from the intermediate layer 220 into the third command to be executed by the third OS 180. Such conversion of the command is performed by extraction of the command from the command data section 54a or acquisition of the second command or the third command associated in the conversion table or the like, as described with use of Fig. 5, for example.

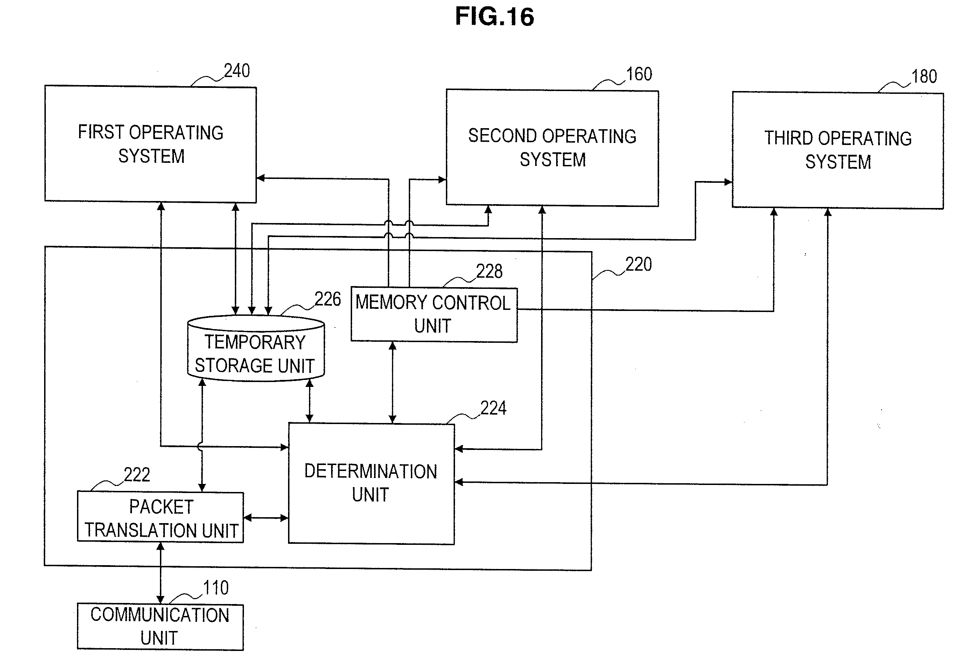

Fig. 16 is a block diagram showing a detailed configuration of the intermediate layer 220 according to the embodiment. Referring to Fig. 16, the intermediate layer 220 includes a packet translation unit 222, a determination unit 224, a temporary storage unit 226, and a memory control unit 228.

When a communication packet is received by the communication unit 110, the packet translation unit 222 translates the content of the communication packet and directs the determination unit 224 to determine the transfer destination of a command for the first OS 240, the second OS 160 or the third OS 180. At this time, the command acquired from the communication packet is stored in the temporary storage unit 226.

The determination unit 224 determines the transfer destination of the command by reference to the command header section 52 of the command received from the external device and in accordance with a command code or the like contained in the command header section 52, for example. When the determination unit 224 determines that the command received from the external device 10 is the first command, for example, the determination unit 224 inputs the first command to the first OS 240. Then, when a first response is output from the first OS 240 as a response to the first command after that, the determination unit 224 outputs the first response to the packet translation unit 222, so that it is transmitted to the external device 10 through the communication unit 110.

Further, when the second command is output as a response to the first command, for example, the determination unit 224 inputs the second command to the second OS 160. Then, when a second response as a response to the second command is output from the second OS 160, the determination unit 224 inputs the second response to the first OS 240 that has output the second command, rather than transmitting it to the external device 10.

Further, when the third command is output as a response to the first command, for example, the determination unit 224 inputs the third command to the third OS 180. Then, when a third response as a response to the third command is output from the third OS 180, the determination unit 224 inputs the third response to the first OS 240 that has output the third command, rather than transmitting it to the external device 10.

The temporary storage unit 226 temporarily stores commands and responses exchanged between the packet translation unit 222 and the determination unit 224 and between the determination unit 224 and first OS 240, the second OS 160 or the third OS 180, control data or the like.

The memory control unit 228 controls access to memory of the first OS 240, the second OS 160 and the third OS 180 in order to avoid that memory access occurs concurrently among the first OS 240, the second OS 160 and the third OS 180 and a failure occurs in the communication device 100.

Note that, although not shown in Fig. 16, restrictions may be imposed on exchange of commands among the OSs by providing the intermediate layer 220 with a means of filtering transfer of the commands in this embodiment also, as in the first embodiment. Further, information such as the application code which is necessary for execution of a command by the second OS 160 or the third OS 180 may be hidden from the first OS 240.

The second embodiment of the present invention is described above with reference to Figs. 14 to 16. In the case where three OSs are incorporated into the communication device 200 as in this embodiment, by providing the first OS 240 with a plurality of conversion means that convert the first command into the second command and the third command, respectively, for example, it is possible to use application services by the three OSs through the device that supports the first command only. This eliminates the need to support a plurality of communication protocols between the communication device 200 and the external device 10, thereby expanding the versatility of the communication device 200. Further, because it is not necessary to provide each OS with a special interface for accepting access from another OS, the security level of the OS does not decrease.

Further, rather than providing a command conversion means for each OS as in this embodiment, it is feasible to classify a command group executed by one OS into two sets and provide a plurality of command conversion means corresponding to the respective sets. For example, when the second OS 160 supports both of a command group for radio communication and a command group for wire communication, the first OS 240 may include a first command conversion unit that converts the first command into a command for radio communication and a second command conversion unit that converts the first command into a command for wire communication. In such a configuration, by combining the command filtering processing by the intermediate layer 120 shown in Fig. 12, for example, more detailed setting of the security level than the units of OS is enabled, and the safety of the communication device 200 is further enhanced.

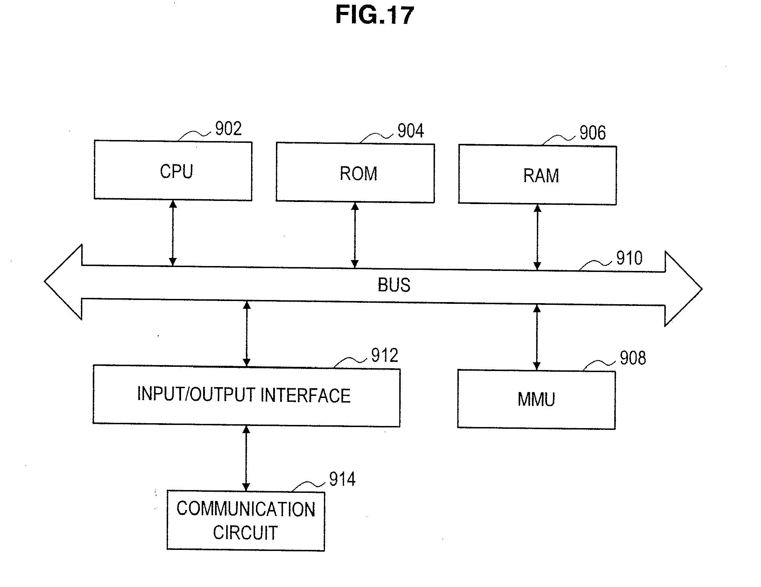

It should be noted that a series of processing according to the first and the second embodiments described in this specification is typically implemented by software operating on a computer provided in the communication device. Fig. 17 is a block diagram showing an example of a configuration of hardware by which a series of processing according to each embodiment operates.

In Fig. 17, a CPU 902 controls the overall operation of the communication device. In ROM (Read Only Memory) 904, a program describing a part or the whole of the series of processing or data is stored. In RAM 906, a program, data or the like to be executed by the CPU 902 is temporarily stored. An MMU 908 controls access to memory from the CPU 902. Further, although not shown in Fig. 17, an additional application may be further stored by incorporating nonvolatile memory such as EEPROM (Electrically Erasable and Programmable ROM).

The CPU 902, the ROM 904, the RAM 906 and the MMU 908 are connected to one another through a bus 910. An input/output interface 912 is also connected to the bus 910.

The input/output interface 912 is an interface for connecting the CPU 902, the ROM 904, the RAM 906 and the MMU 908 with a communication circuit 914.

The communication circuit 914 transmits and receives a communication packet with the external device 10 in conformity with a predetermined communication protocol. The communication circuit 914 may support contactless communication conforming to standard specification of ISO14443, contact communication conforming to standard specification of ISO7816 or the like, for example.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

For example, the processing described with use of Figs. 9 to 11 is not necessarily executed according to the sequence shown in the flowcharts. Each processing step may include processing executed in parallel or individually.

Further, for example, the number of applications of each OS is not limited to the number indicated in this specification. The applications can be added or deleted according to need by the method of rewriting the content of EEPROM described above, for example,

### Reference Signs List

- 50: command
- 52: command header section
- 54: command data section
- 60: response
- 62: response data section
- 64: response status section
- 100, 200: communication device
- 110: communication unit
- 120, 220: intermediate layer
- 122, 222: packet translation unit
- 124, 224: determination unit
- 126, 226: temporary storage unit
- 128, 228: memory control unit
- 130: firewall
- 132: condition holding unit
- 134: management table
- 136: table operation unit
- 140, 240: first operating system
- 142: first execution environment
- 144: first command translation unit
- 146: first command execution unit
- 148: first storage unit
- 150, 250(A, B): application
- 152, 252(A, B): command conversion unit
- 160: second operating system
- 162: second execution environment
- 164: second command translation unit
- 166: second command execution unit
- 168: second storage unit
- 172, 174: application
- 180: third operating system

## Claims

1. A communication device comprising:
a first operating system that executes commands belonging to a first command group;
a second operating system that executes commands belonging to a second command group different from the first command group; and
a determination unit that,
when a first command belonging to the first command group is received from an external device, inputs the first command to the first operating system,
when a first response is output from the first operating system as a response to the first command, transmits the first response to the external device, and
when a second command belonging to the second command group is output from the first operating system as a response to the first command, inputs the second command to the second operating system and then inputs a second response as a response to the second command output from the second operating system to the first operating system.

2. The communication device according to claim 1, wherein, when the second command belonging to the second command group is received from an external device, the determination unit inputs the second command to the second operating system, and
when a second response is output from the second operating system as a response to the second command received from the external device, the determination unit transmits the second response to the external device.

3. The communication device according to claim 1, wherein
the first operating system includes a command conversion unit that converts at least one command belonging to the first command group into a command belonging to the second command group.

4. The communication device according to claim 3, wherein
the commands belonging to the first command group contain a header section and a data section, and
the command conversion unit converts a command by extracting a command belonging to the second command group from the data section of the command belonging to the first command group.

5. The communication device according to claim 3, wherein
the first operating system further includes a conversion table for converting a command belonging to the first command group into a command belonging to the second command group, and
the command conversion unit converts a command by referring to the conversion table and acquiring a command belonging to the second command group associated with the command belonging to the first command group.

6. The communication device according to claim 1, wherein
the first operating system includes a first command conversion unit that converts at least one command belonging to the first command group into a command belonging to the second command group, and a second command conversion unit that converts at least one command belonging to the first command group into another command belonging to the second command group.

7. The communication device according to claim 1, further comprising:
a third operating system that executes commands belonging to a third command group different from the first command group and the second command group, wherein
the first operating system includes a first command conversion unit that converts at least one command belonging to the first command group into a command belonging to the second command group, and a second command conversion unit that converts at least one command belonging to the first command group into a command belonging to the third command group.

8. The communication device according to claim 1, wherein
when the second command is output from the first operating system as a response to the first command, the determination unit rewrites information identifying an application of the second operating system and contained in the second command according to a predetermined correspondence table before inputting the second command to the second operating system.

9. The communication device according to claim 1, wherein
the commands belonging to the second command group contain a header section and a data section, and
when the second command is output from the first operating system as a response to the first command, the determination unit inputs the second command to the second operating system only when the header section of the second command satisfies a predetermined condition set in advance.

10. The communication device according to claim 1, wherein
when the second response as a response to the second command is not output from the second operating system even after a predetermined time interval has elapsed from input of the second command to the second operating system, the determination unit inputs the second command to the second operating system again.

11. The communication device according to claim 1, wherein
when the second response as a response to the second command is not output from the second operating system even after a predetermined time interval has elapsed from input of the second command to the second operating system, the determination unit inputs a response indicating occurrence of an error to the first operating system.

12. A communication method in a communication device including a first operating system that executes commands belonging to a first command group, and a second operating system that executes commands belonging to a second command group different from the first command group, the method comprising the steps of:
when a first command belonging to the first command group is received from an external device, inputting the first command to the first operating system;
when a first response is output from the first operating system as a response to the first command, transmitting the first response to the external device;
when a second command belonging to the second command group is output from the first operating system as a response to the first command, inputting the second command to the second operating system; and
inputting a second response output from the second operating system as a response to the second command output from the first operating system to the first operating system.

13. A program causing a computer controlling a communication device to function as:
a first operating system that executes commands belonging to a first command group;
a second operating system that executes commands belonging to a second command group different from the first command group; and
a determination unit that,
when a first command belonging to the first command group is received from an external device, inputs the first command to the first operating system,
when a first response is output from the first operating system as a response to the first command, transmits the first response to the external device, and
when a second command belonging to the second command group is output from the first operating system as a response to the first command, inputs the second command to the second operating system and then inputs a second response as a response to the second command output from the second operating system to the first operating system.
